Europäisches Patentamt

European Patent Office

Office européen des brevets

(11) Veröffentlichungsnummer: **0 405 565 A1**

# (12) EUROPÄISCHE PATENTANMELDUNG

(21) Anmeldenummer: **90112382.8**

(22) Anmeldetag: **28.06.90**

(51) Int. Cl.5: **B01D 53/34**

(30) Priorität: **28.06.89 DE 3921180**

(43) Veröffentlichungstag der Anmeldung:
**02.01.91 Patentblatt 91/01**

(84) Benannte Vertragsstaaten:
**AT BE CH DE FR GB IT LI NL SE**

(71) Anmelder: **GSB Gesellschaft zur Beseitigung von Sondermüll in Bayern mbH**
**Herzogstrasse 60**
**D-8000 München 40(DE)**

(72) Erfinder: **Luxenberg, Peter, Dr. rer. nat.**
**Winzererstrasse 158 a**
**D-8000 München 40(DE)**

(74) Vertreter: **Tetzner, Volkmar, Dr.-Ing. Dr. jur.**
**Van-Gogh-Strasse 3**
**D-8000 München 71(DE)**

(54) **Verfahren und Anlage zur Reinigung von schadstoffhaltigen Abgasen unter Vermeidung von Salzrückständen.**

(57) Die Erfindung betrifft ein Verfahren zur Reinigung von schadstoffhaltigen Abgasen, insbesondere von $SO_2$ und/oder Hg-haltigen Abgasen, unter Vermeidung löslicher Salzrückstände, wobei ein aus einer Naßwaschzone abgezogener Teilstrom der Waschflüssigkeit einer Elektrolysezone zugeführt und zumindest ein Teil des in der Elektrolysezone gewonnenen $Cl_2$ in die Naßwaschzone zurückgeführt wird.

Ein derartiges Verfahren ermöglicht es, den Anteil der löslichen Chloride im Abwasser zu verringern, den ungenügenden Abscheidegrad des $SO_2$ zu verbessern und die Abscheidung von elementaren Schwermetallen zu bewirken, wobei ein verwertbares Produkt (HCl) gewonnen wird.

EP 0 405 565 A1

## VERFAHREN UND ANLAGE ZUR REINIGUNG VON SCHADSTOFFHALTIGEN ABGASEN UNTER VERMEIDUNG VON SALZRÜCKSTÄNDEN

Die Erfindung betrifft ein Verfahren entsprechend dem Oberbegriff des Anspruches 1 sowie eine Anlage gemäß dem Gattungsbegriff des Anspruches 13.

Zur Reinigung von schadstoffhaltigen Abgasen ist es üblich, die Abgase mit abnehmend saurer Waschflüssigkeit in Berührung zu bringen, wobei in der ersten Waschstufe $HCl$, $HF$ und Schwermetalle und in den nachfolgenden, schwächer sauren Waschstufen $SO_2$ abgeschieden werden.

Hierbei fallen salzhaltige Rückstände an (je nach Neutralisationsmittel $NaCl$ oder $CaCl_2$), die nach Entfernung umweltrelevanter Verunreinigungen als schwachprozentige Salzlösung in den Vorfluter gegeben werden.

Andere Verfahren zur Behandlung von salzhaltigem Abwasser sind beispielsweise die Eindampfung des Abwassers oder die Sprühtrocknung bzw. Trockensorption, wobei feste Salze im Gemisch mit übrigen Rückständen entstehen. Eine Verwertung der entstandenen Salze, wie beispielsweise Natriumchlorid, wäre erst nach einer sehr aufwendigen Beseitigung auch der Beimengungen von Kalium, Magnesium und Calcium möglich. Die nicht verwerteten Salze sind auf einer Deponie, aufgrund der leichten Löslichkeit, vorzugsweise unter Tage, abzulagern. Denkbar wäre auch eine destillative Wiedergewinnung von $HCl$ durch fraktionierte Destillation des sauren Rauchgas-Waschwassers. Hierbei bereitet jedoch die Abtrennung von $HF$ größere Schwierigkeiten.

In der Naßwaschzone wird $SO_2$ in einem oxidativen Mechanismus unter Einwirkung von Natronlauge und überschüssigem Sauerstoff in $SO_4''$ umgewandelt und abgeschieden.

Bei bekannten Anlagen wird bei gleichmäßiger Belastung mit $SO_2$ ein Abscheidegrad von bis zu 90% erreicht.

Bei $SO_2$-Spitzen, die in der Regel mit einem Minderangebot an $O_2$ verbunden sind, ist jedoch der Abscheidegrad wesentlich geringer, und es kommt vielfach zu einer Überschreitung des zulässigen $SO_2$-Grenzwertes im Abgas.

Bekannte Methoden zur Verbesserung des Abscheidegrades bzw. zur Vermeidung von Grenzwertüberschreitungen bestehen in der Überdosierung des Neutralisationsmittels, wobei $SO_2$ als $SO_3''$ ausgetragen und extern mit Luft zu $SO_4''$ umgewandelt werden muß. Weiterhin ist es zur Verbesserung des Abscheidegrades bekannt, die Oberfläche der Waschflüssigkeit zu vergrößern, um den oxidativen Prozeß zu beschleunigen. Zudem deuten neuere Erkenntnisse zur Dioxin- und Furanbildung darauf hin, daß ein Sauerstoffüberschuß im Abgas zu vermeiden ist und somit nicht mehr im bisherigen Umfang mit den oben genannten oxidativen Mechanismen zu rechnen ist.

Die Restemission an $Hg$ besteht überwiegend aus gasförmigem $Hg°$, das nicht abgeschieden werden kann.

Gewisse Anteile anderer Schwermetalle, wie beispielsweise $Pb$, $Cu$, $Cd$ und $Zn$, verhalten sich ähnlich wie $Hg$, wobei es sich in diesem Falle allerdings eher um metallische Aerosole handeln dürfte, die auch die nach VDI vorgeschriebenen Filter zur Bestimmung staubförmiger Schwermetall-Emissionen passieren.

Der Erfindung liegt daher die Aufgabe zugrunde, das im Oberbegriff des Anspruchs 1 vorausgesetzte Verfahren dahin weiterzuentwickeln, daß der Anteil der löslichen Chloride im Abwasser - unter Gewinnung eines verwertbaren Produktes - entscheidend verringert, der ungenügende Abscheidegrad des $SO_2$ verbessert und die Abscheidung von elementaren Schwermetallen, insbesondere $Hg$, erreicht wird.

Diese Aufgabe wird erfindungsgemäß durch die kennzeichnenden Merkmale des Anspruchs 1 gelöst.

Erfindungsgemäß wird somit ein aus der Naßwaschzone abgezogener Teilstrom der sauren Waschflüssigkeit einer Elektrolysezone zugeführt. Zumindest ein Teil des in dieser Elektrolysezone gewonnenen $Cl_2$ (sowie je nach Ausführung auch des $BrO_3'$, $JO_3'$) wird wieder in die Naßwaschzone eingeleitet und reagiert dort mit dem $SO_2$, wobei $H_2SO_4$ entsteht. Damit wird eine Dosierung von teurer Natronlauge nur noch in Ausnahmefällen nötig (die Gewinnung von $Cl_2$ aus Säure ist energetisch günstiger als die Gewinnung von $NaOH$ und $Cl_2$ aus $NaCl$).

Vorteilhaft ist hierbei ferner, daß eine fast restlose Abscheidung von $Hg$ und anderen Schwermetallen durch Überführung in $HgCl_2$ gelingt und auf diese Weise das bisher nur ungenügend aus den Abgasen zu entfernende $Hg$ wirksam abgeschieden werden kann, wobei gleichzeitig eine Vorreinigung des Teilstromes und eine einwandfreie Abtrennung von $HF$ erfolgen, was die Gewinnung einer sauberen und verwertbaren $HCl$ ermöglicht.

Gemäß einer zweckmäßigen Ausgestaltung der Erfindung wird das übrige in der Elektrolysezone gebildete $Cl_2$ und $H_2$ einer Stufe zur $HCl$-Synthese zugeführt. Indem auf diese Weise aus dem abgezogenen Teilstrom verwertbare Salzsäure zurückgewonnen wird, verringert man wesentlich den Anteil der löslichen Chloride im Rückstand.

Weitere Merkmale der Erfindung sind Gegenstand der Unteransprüche und werden im Zusammenhang mit der folgenden Beschreibung zweier Ausführungsbeispiele näher erläutert.

In der Zeichnung zeigen

Fig. 1 eine Schemadarstellung eines ersten Ausführungsbeispieles einer nach dem erfindungsgemäßen Verfahren arbeitenden Anlage,

Fig. 2 eine Schemadarstellung eines weiteren Ausführungsbeispieles

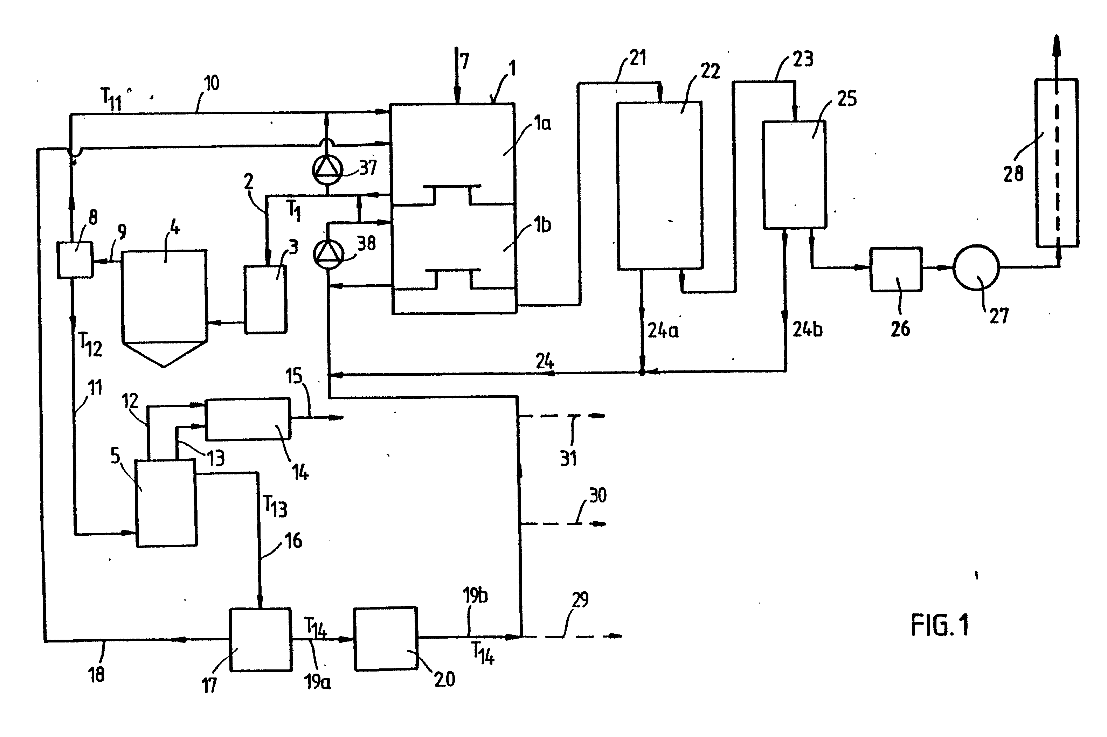

Die Anlage gemäß Fig.1 enthält eine Naßwaschzone 1 mit einer ersten Naßwaschstufe 1a. Die zu reinigenden schadstoffhaltigen Abgase werden über eine Einspeiseleitung 7 in die erste Naßwaschstufe 1a eingeleitet, wobei sie von ca. 280 °C auf die Kühlgrenztemperatur von 60 bis 70 °C abgekühlt werden. Hierbei wird der gröbste Teil von HCl, HF und $HgCl_2$ abgeschieden.

Die Anlage enthält ferner eine Elektrolysezone mit einer ersten Elektrolysestufe 4 und einer zweiten Elektrolysestufe 5.

Die erste Naßwaschstufe 1a steht mit der ersten Elektrolysestufe 4 über eine Leitung 2 und einen Lamellenklärer 3 in Verbindung.

Aus der ersten Elektrolysestufe 4 führt eine Leitung 9 in einen Puffer 8. Dieser Puffer 8 steht einerseits über eine Rücklaufleitung 10 mit der ersten Naßwaschstufe 1a und andererseits über eine Leitung 11 mit der zweiten Elektrolysestufe 5 in Verbindung.

Eine Stufe 14 zur HCl-Synthese ist über Leitungen 12 und 13 an die zweite Elektrolysestufe 5 angeschlossen.

Eine Leitung 16 verbindet die zweite Elektrolysestufe 5 mit einem Stripper 17. Von diesem Stripper 17 führt wiederum eine Leitung 18 zurück in die erste Naßwaschstufe 1a. Eine Leitung 19a führt in eine Neutralisationsstufe 20, die über die Rücklaufleitung 19b mit einer zweiten Naßwaschstufe 1b der Naßwaschzone 1 in Verbindung steht.

Auf die erste Naßwaschstufe 1a folgt somit eine zweite Naßwaschstufe 1b, die die vorgereinigten Gase weiterreinigt, insbesondere von $SO_2$. Über die Leitung 21 gelangt das mit Wasserdampf gesättigte Gas (dessen Taupunkt etwa 60 bis 70 °C beträgt) in einen Rauchgaskühler 22, der gleichzeitig als weitere Naßwaschzone zur Feinreinigung von HCl, HF, $HgCl_2$ usw. sowie zur Konditionierung (Nebelbildung) der Rauchgase zwecks Feinreinigung von Staub in einem nachfolgenden Naß-Elektrofilter 25 dient. Der Naß-Elektrofilter 25 ist über eine Leitung 23 an den Rauchgaskühler 22 angeschlossen. Die entsprechend der (von der ersten Naßwaschstufe 1a bis zum Naß-Elektrofilter 25 fortschreitenden) Reinigung des Abgases abnehmend belasteten Kondensate (der Naßwaschzone 1, des Rauchgaskühlers 22 und des Naß-Elektrofilters 25) werden im Gegenstrom der am stärksten belasteten Naßwaschstufe 1a als Ersatzwasser zugeführt (das Waschwasser der Naßwaschstufen 1a und 1b wird in üblicher Weise jeweils im Kreislauf geführt), wobei eine Pumpe 37 bzw. 38 für die Kreislaufführung sorgt. Die Rückführung des Kondensates vom Rauchgaskühler 22 und vom Naß-Elektrofilter 25 zur Naßwaschzone 1 erfolgt über Leitungen 24a, 24b und 24.

Auf den Naß-Elektrofilter 25 folgen eine Einrichtung 26 zur Rauchgaserwärmung, ein Saugzuggebläse 27 und ein Kamin 28.

Die Funktion der Anlage gemäß Fig.1 ist folgendermaßen:

Aus der ersten Naßwaschstufe 1a wird über die Leitung 2 ein Teilstrom $T_1$ der sauren Waschflüssigkeit in den Lamellenklärer 3 eingeleitet, der die gröberen Schlammteilchen entfernt. Der von dort in die erste Elektrolysestufe 4 geführte Teilstrom wird durch den Elektrolysevorgang gemäß

$$2\ Cl'' \rightarrow Cl_2 + 2e' \qquad (1)$$

mit $Cl_2$ angereichert, wodurch die Oxidation von $SO_2$ gemäß

$$SO_2 + Cl_2 + 2H_2O \rightarrow H_2SO_4 + 2HCl \qquad (2)$$

und $Hg°$ gemäß

$$Hg° + Cl_2 \rightarrow HgCl_2 \qquad (3)$$

bewirkt wird. Gleiches gilt für Pb, Cd, Cu usw. Die Wiederüberführung dieser Aerosole in Chloride gelingt, da $Cl_2$ unter den in der ersten Naßwaschstufe 1a herrschenden Bedingungen auch in den Gasraum übergeht.

Gleichzeitig werden Schwermetalle, wie Hg, Cu und Pb, aus dem Teilstrom $T_1$ abgeschieden; $J'$ wird zu $JO_3'$ oxidiert, $Br'$ teils zur $BrO_3'$, teils zu $Br_2$.

Aus der ersten Elektrolysestufe 4 gelangt der Teilstrom $T_1$ über die Leitung 9 in den Puffer 8, aus dem ein Unterteilstrom $T_{11}$ (im allgemeinen der größere Teil von $T_1$) über die Leitung 10 in die erste Naßwaschstufe 1a gelangt.

Durch diesen im Kreislauf geführten Teil der Waschflüssigkeit wird die erste Naßwaschstufe 1a so weit mit $Cl_2$ angereichert, wie zur Oxidation von $SO_2$ und $Hg°$ erforderlich ist. Der rückgeführte Anteil an $BrO_3'$, $JO_3'$, $Br_2$ trägt ebenfalls zur Oxidation von $SO_2$ bei, wobei wiederum eine Reduktion zu $Br'$ bzw. $J'$ erfolgt. Die notwendige $Cl_2$-Dosierung in der Waschflüssigkeit erfolgt vorzugsweise über eine $SO_2$-Messung im Kamin 28 (Regelung auf einen Restgehalt von ca. 10mg/$Nm^3$ $SO_2$).

Der Puffer 8 soll die teilweise großen Schwankungen des Teilstromes $T_1$ und des $Cl_2$-Bedarfs in der Naßwaschstufe 1a ausgleichen und den der Elektrolysestufe 5 zugeführten Unterteilstrom $T_{12}$ vergleichmäßigen.

Hier wird gemäß (1) $Cl_2$ bzw. ferner gemäß

$$2\ H^+ + 2\ e^- \rightarrow H_2 \qquad (4)$$

$H_2$ erzeugt und über die Leitung 12 bzw. 13 in die Stufe 14 zur HCl-Synthese gemäß

$$H_2 + Cl_2 \rightarrow 2\,HCl \qquad (5)$$

eingeleitet. $JO_3{}'$, $BrO_3{}'$ und $F'$ bleiben hierbei in Lösung. Restliches Hg wird als Amalgam abgeschieden, so daß $H_2$ und HCl nur mit minimalen Verunreinigungen belastet sind.

Über die Leitung 15 der Stufe 14 kann dann das gewonnene HCl abgezogen werden. Auf diese Weise werden mindestens 90% der Chloride der Waschflüssigkeit in verwertbare HCl umgewandelt.

Der restliche Unterteilstrom $T_{13}$ wird über die Leitung 16 in den Stripper 17 eingeleitet. Noch hierbei enthaltenes freies $Cl_2$ wird aus dem Unterteilstrom $T_{13}$ mit Rauchgas oder Luft entfernt und als Gasstrom über die Leitung 18 in die erste Naßwaschstufe 1a eingeleitet. Die Strippung im Stripper 17 ist wegen der Temperatur von ca. 60°C mit geringem Aufwand möglich.

Der von diesen gasförmigen Bestandteilen gereinigte Unterteilstrom T14 wird der Neutralisationsstufe 20 zugeführt, in der durch Zugabe von Neutralisationsmitteln, wie $CaCO_3$, $Ca(OH)_2$ und $Na_2S$, eine Neutralisation sowie eine Fällung restlicher Schwermetalle sowie von $F'$ und $SO_4''$ erfolgt.

Von hier läuft dann der Unterteilstrom $T_{14}$ über die Leitung 19b in die zweite Naßwaschstufe 1b zurück. Von dieser Leitugn 19b können eine Leitung 29 als Notablauf, eine Leitung 30 in eine Kalkmilchanlage und eine Leitung 31 zu einem Naßentschlacker als Brauchwasserersatz abgehen.

Die Waschflüssigkeit der ersten Naßwaschstufe 1a ist eine Mischsäure aus HCl, HF und $H_2SO_4$. Aufgrund des hohen Säuregehaltes genügt zur Abscheidung von $H_2$ bzw. $Cl_2$ in der zweiten Elektrolysestufe 5 eine verhältnismäßig geringe Spannung (beispielsweise 1 bis 1,5 V).

Die in der Naßwaschstufe 1a vorgereinigten Abgase durchlaufen die Naßwaschstufe 1b, den Rauchgaskühler 22 und den Naß-Elektrofilter 25.

Hiermit ist eine Emission von $Cl_2$ - sowie von $Br_2$ und $J_2$ - sicher ausgeschlossen. In den neutral bis schwach sauer betriebenen Reinigungsstufen (Naßwaschstufe 1b, Rauchgaskühler 22 und Naß-Elektrofilter 25) wird $SO_2$ gemäß

$$SO_2 + 2\,OH' + \tfrac{1}{2}O_2 \rightarrow SO_4'' + H_2O \qquad (6)$$

abgeschieden, so daß bei Regelung auf einen Emissionsrest von ca. 10 mg/Nm³ in der Naßwaschstufe 1a ein Überschuß von $SO_2$ ($\gg$ 10 mg/Nm³) vorhanden ist, der alles $Cl_2$ (auch $Br_2$ und $J_2$) sofort verbraucht.

Die zweite Naßwaschstufe 1b sowie der Rauchgaskühler 22 werden schwach sauer betrieben und können gegebenenfalls kleinere $Cl_2$-Durchbrüche absorbieren. Eine Anreicherung und plötzliche Freisetzung von $Cl_2$ ist im Gegensatz zu alkalisch betriebenen Naßwaschzonen ausgeschlossen.

Bei den der Erfindung zugrundeliegenden Versuchen hat sich gezeigt, daß sich unter den beschriebenen Bedingungen der $SO_2$-Oxidation auch Hg nahezu komplett abscheidet.

Eine Regelung der $Cl_2$-Dosierung über die Hg-Emissionsmessung ist daher normalerweise nicht nötig. Nur bei extremer Hg-Belastung kann dies erforderlich sein, wobei zur Sicherheit eine handelsübliche $Cl_2$-Messung am Kamin angebracht werden kann (oder besser eine einfache Redox-Messung, die nach Umsetzung des Abgases mit einer ca. 1n $H_2SO_4$ + 1m KJ - Lösung $Cl_2$, $Br_2$ sowie $J_2$ als $KJ \cdot J_2$ erfaßt).

Eine vermehrte Emission von Chlorkohlenwasserstoffen infolge der Reaktionen von Restkohlenstoff mit $Cl_2$ ist aufgrund des spontanen Verbrauchs des $Cl_2$ nicht zu erwarten. Abgesehen davon sind Restemissionen von Restkohlenstoff wegen der damit verbundenen Bildung von Dioxinen und Furanen im mittleren Temperaturbereich des Kessels und Elektrofilters ohnehin zu vermeiden.

Was die Verunreinigungen der Produkte $H_2$, $Cl_2$ und HCl anbelangt, so wurden bei den der Erfindung zugrundeliegenden Versuchen keine gravierenden Verunreinigungen des $H_2$ festgestellt. Hg ist nach Durchlaufen der ersten Elektrolysestufe 4 weitgehend entfernt. Aufgrund der ggf. vorhandenen Metalle Cu, Pb, Cd, Zn werden etwaige Reste von Hg als Cu-, Pb-, Cd-, Zn-Amalgam abgeschieden, so daß Hg° nicht mit dem $H_2$ ausgetragen wird. In der ersten Elektrolysestufe 4 wird eventuell mit $H_2$ ausgasendes Hg° im $Cl_2$-haltigen Wasser wieder absorbiert. In der zweiten Elektrolysestufe 5 würde Hg° aufgrund der Trennung des Anoden- und Kathodenraumes mit dem $H_2$ austreten.

Etwaige Verunreinigungen von $H_2$ und $Cl_2$ durch strippbare Chlorkohlenwasserstoffe bzw. Kohlenwasserstoffe werden bei der HCl-Synthese (ca. 2000°C) weitgehend zerstört.

$Cl_2$ kann noch durch $Br_2$ verunreinigt sein. $Br'$ setzt sich im Gegensatz zu $J'$ in der ersten Elektrolysestufe 4 nur zum Teil zu $BrO_3{}'$ und zum anderen Teil zu $Br_2$ um. $JO_3{}'$ und $BrO_3{}'$ verbleiben in Lösung. $Br_2$ würde jedoch zusammen mit $Cl_2$ ausgetragen.

Eine mögliche Abhilfe erfordert zunächst eine Klärung, wieviel HBr die HCl enthalten darf. Im übrigen können Br-haltige Abfälle ausgesondert werden. Im Puffer 8 kann die Oxidation zu $BrO_3{}'$ vervollständigt werden. Im Zulauf zur zweiten Elektrolysestufe 5 kann etwas $KMnO_4$ zugegeben werden. Weiterhin kann HBr aus der HCl durch Zugabe einer äquivalenten Menge $Cl_2$ ausgetrieben werden. Schließlich ist es möglich, der Elektrolysestufe 5 eine weitere Elektrolysezelle mit einer Betriebsspannung kleiner 1 V vorzuschalten, so daß nur $Br_2/J_2$ oxidiert und gestrippt werden.

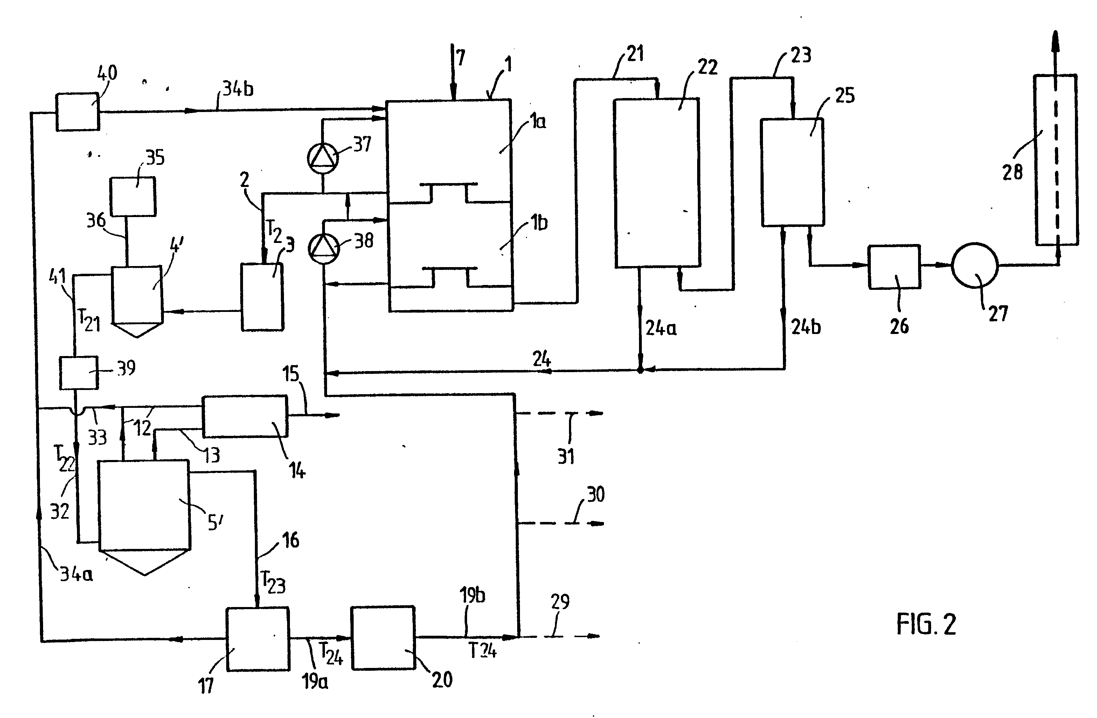

In Fig. 2 ist ein weiteres Ausführungsbeispiel einer erfindungsgemäßen Anlage dargestellt. Über eine Leitung 36 ist ein Absorber 35 an eine erste Elektrolysestufe 4' angeschlossen. Von dieser ersten Elektrolysestufe 4' führt eine Leitung 41 in einen Puffer 39, der über eine Leitung 32 mit einer zweiten Elektrolysestufe 5' in Verbindung steht.

Von der Leitung 12, die das gewonnene $Cl_2$ der zweiten Elektrolysestufe 5' in die Stufe 14 zur HCl-Synthese leitet,führt eine Leitung 33 ab, die dann in die Leitung 34a einmündet. Die Leitung 34a verbindet den Stripper 17 mit einem Puffer 40. Die vom Puffer 40 abgehende Leitung 34b mündet über eine nicht veranschaulichte Vorrichtung, wie beispielsweise eine Wasserstrahlpumpe, in die erste Naßwaschstufe 1a oder zuvor in den Kreislauf der Naßwaschstufe 1a.

Im übrigen ist der Aufbau dieser Anlage mit der Anlage gemäß Fig. 1 identisch, so daß in Fig. 2 für gleiche Anlagenteile dieselben Bezugszeichen wie in Fig. 1 vorgesehen sind.

Die Funktion der Anlage gemäß Fig. 2 ist folgendermaßen:

Aus der ersten Naßwaschstufe 1a wird, im Gegensatz zur Anlage gemäß Fig. 1, ein kleinerer Teilstrom $T_2$ abgezweigt. Die entsprechend kleinere erste Elektrolysestufe 4' wird mit einer Spannung unter 1 Volt betrieben, so daß noch kein $Cl_2$, sondern nur $Br_2$ und $J_2$ abgeschieden werden. Bei den gegebenen Temperaturen von ca. 60° können das $Br_2$ bzw. $J_2$, aufgrund der geringen Löslichkeit beispielsweise durch einen im Kreislauf geführten Luftstrom mit geringem Aufwand über die Leitung 36 in den Absorber 35 ausgetrieben werden. Im Absorber 35 wird das $Br_2$ bzw. $J_2$ mit Natronlauge absorbiert.

Die Aufgabe der Elektrolysestufe 4' besteht hier vorwiegend in der Entfernung von $Br_2$ und $J_2$. Die Abreicherung von Schwermetallen ist dagegen weniger effektiv.

Der von Br' bzw. J' befreite Teilstrom $T_{21}$ wird über die Leitung 41 in den Puffer 39 geführt. Der Puffer 39 läßt einen konstanten Teilstrom $T_{22}$ in die zweite, größere Elektrolysestufe 5' gelangen.

Die zweite Elektrolysestufe 5' wird wie die Elektrolysestufe 5 in Fig.1 betrieben. Wegen der in diesem Falle (Fig.2) geringen Schwermetall-Abscheidung in der Elektrolysestufe 4' ist jedoch mit einer höheren Schwermetallabscheidung in der Elektrolysestufe 5' zu rechnen, so daß die Kathodenräume von Schwermetallen befreit werden müssen (z.B. durch Fluten mit Chlorwasser aus dem Anodenraum).

Der verbleibende Teilstrom $T_{23}$ wird aus der zweiten Elektrolysestufe 5' in den Stripper 17 geleitet. Noch hierbei enthaltenes $Cl_2$ wird ausgetrieben und in einem Gasstrom über die Leitung 34a in den Puffer 40 geleitet. Der restliche Teilstrom $T_{24}$ wird gemäß der Beschreibung der Fig.1 in die zweite Naßwaschstufe 1b zurückgeführt.

Von der Leitung 12 wird ein Teil des in der zweiten Elektrolysestufe 5' gewonnenen $Cl_2$ über eine Leitung 33 abgezweigt, die dann in die vom Stripper 17 kommende Leitung 34a einmündet. Der Puffer 40 kann dann das $Cl_2$ kontrolliert über die Leitung 34b in die erste Naßwaschstufe 1a abgeben.

Der Säuregehalt der Waschflüssigkeit in der ersten Naßwaschstufe 1a ist größer als in der zweiten Naßwaschstufe 1b, wobei die Waschflüssigkeit vorzugsweise in der ersten Naßwaschstuffe einen HCl-Gehalt zwischen 3 und 10 Gew% und in der zweiten Naßwaschstufe 1b einen HCl-Gehalt zwischen 0,3 und 1 Gew% aufweist.

Die Waschflüssigkeit im Rauchgaskühler 22 weist einen pH-Wert von 3 bis 4 auf.

## Ansprüche

1. Verfahren zur Reinigung von schadstoffhaltigen Abgasen, insbesondere von $SO_2$- und/oder Hg-haltigen Abgasen, unter Meidung löslicher Salzrückstände, wobei die Abgase in einer Naßwaschzone (1) mit saurer Waschflüssigkeit in Berührung gebracht werden,
gekennzeichnet durch folgende Verfahrensschritte:

   a) ein aus der Naßwaschzone (1) abgezogener Teilstrom der Waschflüssigkeit wird einer Elektrolysezone zugeführt;

   b) zumindest ein Teil des in der Elektrolysezone gewonnenen $Cl_2$ wird in die Naßwaschzone (1) zurückgeführt.

2. Verfahren nach Anspruch 1, dadurch gekennzeichnet, daß das übrige in der Elektrolysezone gebildete $Cl_2$ und $H_2$ einer Stufe (14) zur HCl-Synthese zugeführt wird.

3. Verfahren nach Anspruch 1, dadurch gekennzeichnet, daß die Elektrolysezone aus wenigstens zwei Elektrolysestufen (4, 5; 4', 5') besteht, von denen die erste Elektrolysestufe (4; 4') mindestens zur Vorreinigung des aus der Naßwaschzone (1) abgezogenen Teilstromes dient.

4. Verfahren nach Anspruch 3, dadurch gekennzeichnet, daß zwischen den Elektrolysestufen (4, 5; 4', 5') ein Puffer (8; 39) angeordnet ist.

5. Verfahren nach den Ansprüchen 2 und 3, gekennzeichnet durch folgende Merkmale:

   a) die erste Elektrolysestufe (4) wird so betrieben, daß sich in dieser Stufe $Cl_2$ bildet, J' sowie Br' in $JO_3$ bzw. $BrO_3$ überführt werden und Schwermetalle abgeschieden werden;

   b) nach der ersten Elektrolysestufe wird ein erster Unterteilstrom der mit $Cl_2$ angereicherten Waschflüssigkeit unmittelbar in die Naßwaschzone (1) zurückgeführt;

   c) ein zweiter Unterteilstrom der in der ersten Elektrolysestufe (4) mit $Cl_2$ angereicherten Waschflüssigkeit wird der zweiten Elektrolysestufe (5) zugeführt;

   d) das in der zweiten Elektrolysestufe (5) gewonnene $Cl_2$ und $H_2$ wird der Stufe (14) zur HCl-Synthese zugeführt;

   e) der zweite Unterteilstrom der Waschflüssigkeit wird nach Durchsetzen der zweiten Elektrolysestufe (5) in die Naßwaschzone (1) zurückgeführt.

6. Verfahren nach Anspruch 5, dadurch gekennzeichnet, daß aus dem zweiten Unterteilstrom der Waschflüssigkeit nach Durchsetzen der zweiten Elektrolysestufe (5) noch vorhandene gasförmige Bestandteile entfernt werden und das hierbei anfallende $Cl_2$ in einem Gasstrom wieder der Naßwaschzone (1) zugeführt wird.

7. Verfahren nach den Ansprüchen 2 und 3, gekennzeichnet durch folgende Verfahrensschritte:

   a) die erste Elektrolysestufe (4') wird so betrieben, daß in dieser Stufe kein $Cl_2$ entsteht, sondern nur $Br_2$ und $J_2$ abgeschieden werden;

   b) der aus der ersten Elektrolysestufe (4') abgezogene Teilstrom der Waschflüssigkeit wird der zweiten Elektrolysestufe (5') zugeführt und anschließend über eine Neutralisationsstufe (20) in die Naßwaschzone (1) zurückgeführt;

   c) ein Teil des in der zweiten Elektrolysestufe (5') gebildeten $Cl_2$ wird in einem Gasstrom in die Naßwaschzone (1) zurückgeführt;

   d) der übrige Teil des in der zweiten Elektrolysestufe (5') gebildeten $Cl_2$ sowie das $H_2$ werden der Stufe (14) zur HCl-Synthese zugeführt.

8. Verfahren nach Anspruch 7, dadurch gekennzeichnet, daß aus dem der zweiten Elektrolysestufe (5') abgezogenen Teilstrom der Waschflüssigkeit noch vorhandene gasförmige Bestandteile entfernt werden und das hierbei anfallende $Cl_2$ in einem Gasstrom wieder der Naßwaschzone (1) zugeführt wird.

9. Verfahren nach Anspruch 1, dadurch gekennzeichnet, daß die Naßwaschzone (1) wenigstens zwei Naßwaschstufen (1a, 1b) enthält und der der Elektrolysezone zugeführte Teilstrom aus der ersten Naßwaschstufe (1a) der Naßwaschzone (1) abgezogen wird.

10. Verfahren nach Anspruch 9, dadurch gekennzeichnet, daß der aus der ersten Naßwaschstufe (1a) der Naßwaschzone (1) abgezogene Teilstrom der Waschflüssigkeit in die zweite Naßwaschstufe (1b) der Naßwaschzone (1) eingeführt wird.

11. Verfahren nach Anspruch 9, dadurch gekennzeichnet, daß der Säuregehalt der Waschflüssigkeit in der ersten Naßwaschstufe (1a) größer als in der zweiten Naßwaschstufe (1b) ist, wobei die Waschflüssigkeit vorzugsweise in der ersten Naßwaschstufe (1a) einen HCl-Gehalt zwischen 3 und 10 Gew% und in der zweiten Naßwaschstufe (1b) einen HCl-Gehalt zwischen 0,3 und 1 Gew% aufweist.

12. Verfahren nach Anspruch 11, dadurch gekennzeichnet, daß als weitere Naßwaschstufe ein Rauchgaskühler (22) vorgesehen ist, wobei das die Waschflüssigkeit bildende Kondensat dieses Rauchgaskühlers einen pH-Wert von 3 bis 4 aufweist.

13. Anlage zur Reinigung von schadstoffhaltigen Abgasen, insbesondere von $SO_2$- und /oder Hg-haltigen Abgasen, enthaltend eine Naßwaschzone (1),
gekenzeichnet durch folgende Anlagenteile:

   a) eine Elektrolysezone sowie Anlagenteile zur Zuführung eines aus der Naßwaschzone (1) abgezogenen Teilstromes der Waschflüssigkeit zur Elektrolysezone;

   b) Anlagenteile zur Rückführung zumindest eines Teiles des in der Elektrolysezone gewonnenen $Cl_2$ zur Naßwaschzone (1).

FIG.1

FIG. 2

EP 0 405 565 A1

Europäisches
Patentamt

**EUROPÄISCHER RECHERCHENBERICHT**

Nummer der Anmeldung

EP 90 11 2382

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 001 145 (SOLVAY & CIE) --- | | B 01 D 53/34 |
| A | EP-A-0 254 697 (E. LINDAHL) --- | | |
| A | EP-A-0 017 796 (DECHEMA) ----- | | |
| | | | **RECHERCHIERTE SACHGEBIETE (Int. Cl.5)** |
| | | | B 01 D |

Der vorliegende Recherchenbericht wurde für alle Patentansprüche erstellt

| Recherchenort | Abschlußdatum der Recherche | Prüfer |
|---|---|---|
| DEN HAAG | 11-10-1990 | PYFFEROEN K. |